# EUROPEAN PATENT APPLICATION

(11) **EP 3 409 520 A1**
(43) Date of publication of application: **05.12.2018**
(21) Application number: 18173852.7
(22) Date of filing: 23.05.2018
(51) Int. Cl.: B60J 7/06

(54) **COVERING SYSTEM**

(30) Priority: 01.06.2017 IT 201700060629
(71) Applicant: Marcolin Covering Srl, 33170 Pordenone (PN) (IT)
(72) Inventor: Amato, Davide, 33170 Pordenone (IT)
(74) Representative: Citron, Massimiliano

(57) **Abstract**

A covering system is described for an open-top body, comprising an array of tubular centerings to support a covering tarpaulin, wherein each centering has two feet in contact with, and slidable on, the top edge of opposite side walls (S) of the body.

To simplify the assembly the foot (52) of a or each centering has a cross-section comprising a rectilinear segment (54).

## Description

The invention refers to a covering system for open-top bodies, e.g. of vehicles or fixed containers.

Covering systems are known for covering/uncovering a body that uses a set of centerings to support and unfold a tarpaulin over the body. The centerings slide on opposite edges of the body pulled by cable rings, see e.g. EP09787639.7.

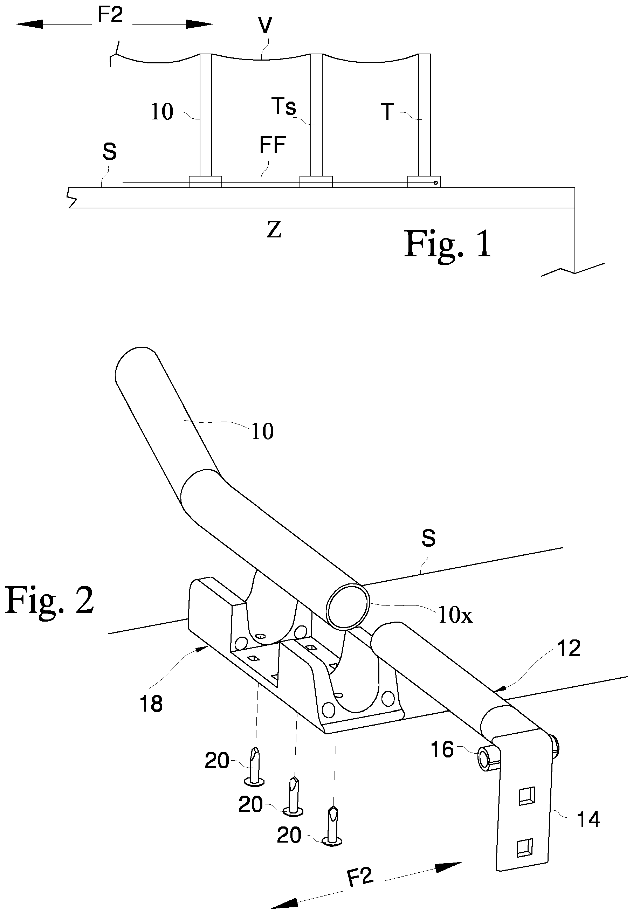

Fig. 1 shows schematically the general system. Above the edge of a side wall S of a body Z there slide horizontally (direction F2 parallel to the edge of the wall S) centerings 10 pulled in known way by a cable FF. In particular, the first one of the row (head centering T) and the second one Ts are shown. The centerings support a covering tarpaulin V. These types of coverings are constructed with various rounded-cross-section tubular centerings 10 (fig. 2). An insert 12 is mounted at the end 10x of the centering 10. The insert 12 has a flattened end for forming a flat part 14, with two square holes, which is vertical in use. This part 14 serves to position a horizontal-axis bush 16 for the passage of the dragging cable FF. A skid 18 is fixed under the centering 10 and the insert 12 through self-piercing screws 20, necessary for firmly locking the end 10x to the skid 18 and the insert 12 to the end 10x.

A problem is to be able to precisely weld the bush 16 on the insert 12. Ensuring their perfect perpendicularity is difficult because the insert 12 is made from a tube and then pressed into a mould. The slightest difference in hardness of the material or in thickness causes different deformations in the part 14 and a consequent misalignment in the bush 16 which thus wears out prematurely due to the rubbing against the cable (which behaves like a file).

Another problem is the replacement of the skid 18 after it has worn out by friction running on the wall S. When this happens, the screws 20 too begin to rub on the wall S and their head wears out, which makes it difficult to replace the skid 18 because the screws 20 cannot be gripped by a tool.

Solving at least one of these problems is the main object of the invention, which is defined in the attached claims, wherein the dependent ones define advantageous variants. In particular, it is desired to solve the problem connected to the misalignment of the bush 16 and to the maintenance of the skid 18.

A system according to the invention preferably has, as a general structure, that of Fig. 1.

Therefore, a covering system is proposed for an open-top body, comprising
an array of tubular centerings to support a covering tarpaulin, wherein each centering has two feet (ends) provided with a skid which is in contact with, and is slidable on, the upper edge of opposite sidewalls of the body, wherein the foot of a or each centering has a cross-section comprising a rectilinear segment.

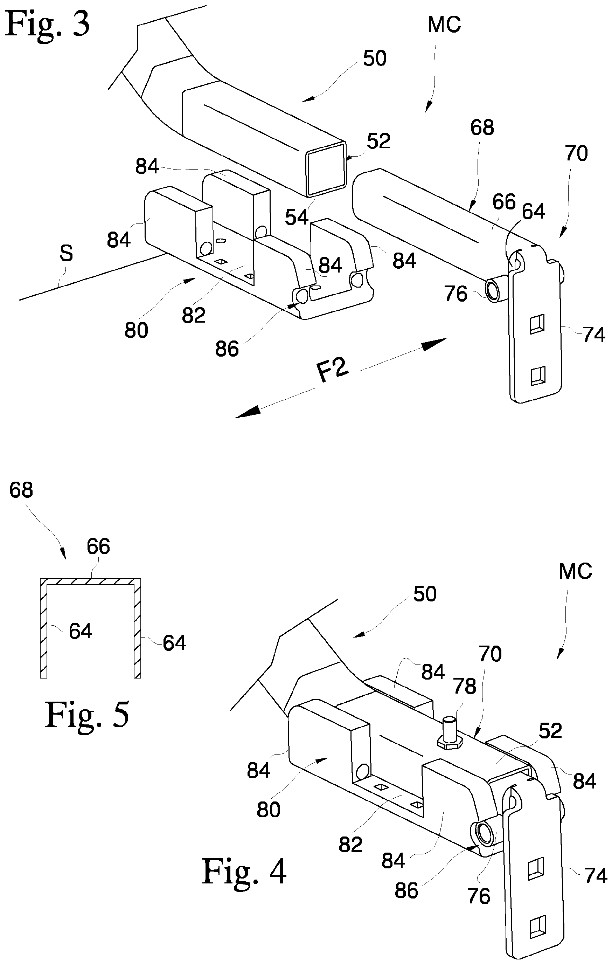

Preferably the cross-section of the centering is closed, i.e. the centering or the foot thereof is a tubular section bar, therefore the rectilinear segment of the cross-section is a material segment. But the cross-section of the centering might also be open, e.g. produced by folding a sheet on itself. The rectilinear segment may then belong to the cross-section, as before, or be virtually identified by two free ends of the cross-section (such as the ends of the walls 64 in Fig. 5).

The rectilinear segment interrupts the polar or circular symmetry of the cross-section, with two big advantages: to avoid the rotation of the foot on the skid and/or the rotation of the insert inside the foot. In fact, the rectilinear segment can be used as an irrotational support base on the skid and/or as an irrotational shape-coupling with the insert's cross-section.

In the first case, to accommodate the foot, the skid preferably comprises a seat provided in cross-section with a rectilinear segment complementary to that of the foot. In the second case, for the connection to the foot, the insert preferably comprises a cross-section comprising a rectilinear segment complementary to that of the foot.

Preferably the foot's section is polygonal or substantially polygonal, i.e. with rounded edges too. The sides of the polygon provide a flat bearing surface for a corresponding flat surface present in the skid and/or in the insert. Preferably, the insert's cross-section, at the portion insertable inside the foot, is complementary to that of the foot. Examples for the polygonal cross-section of the foot and/or the insertable one of the insert are: triangular, square, rectangular or hexagonal. The lower number of sides makes industrial production easier.

The insert's cross- section, at the portion insertable inside the foot, may be either closed, that is a figure without interruptions or without ends, or open, that is a broken line or a polyline with two end points separated from each other (as the ends of the walls 64 in Fig. 5).

The second option is advantageous because it allows producing the insert by starting from a sheet of metal-sheet and then bending it to create a three-dimensional body. In particular, the insertable portion of the insert can be produced by starting from a sheet of metal-sheet and bending it several times at 90° to form a three-dimensional body with a C- or U-shaped cross-section, fitting very well inside a rectangular or square cross-sectioned foot.

In particular, the insertable portion of the insert consists of three flat parts arranged two by two at 90°, so that the cross-section of the insertable portion is a U or C.

In particular, the insertable portion of the insert is elongated along an axis and comprises a surface, arranged on a plane substantially orthogonal to said axis, on which a bush is fixed with an axis parallel to the plane. In general, the bush can have a round, square, or polygonal section, e.g. hexagonal, or be composed of two hemispheres, two half-frames, two semi-cylindrical or semispherical shells or be a tubular element or a tube.

Preferably the cross-section of the skid, at the portion receiving the foot, has a shape complementary to that of the foot. In particular, the cross-section of the skid, at the portion receiving the foot, comprises a seat bounded by walls extending at right angles from a bottom on which the foot is supported. Preferably two of said walls are parallel to each other and comprise, on a side facing the insert, a concavity complementary to the outer surface of the bush. Preferably the concavity in cross-section has the shape of a circumferential arc. The advantage is that the bush for the cable can be applied inside the concavity.

Preferably the lower part - in use - of the foot of one or each centering, at the contact area with the skid, is a flat surface. Such flat surface allows better support by the skid and requires less fixing means. Thus, for example. the number of screws 20 can be reduced, since the flat surface prevents - or at least hinders - that the end of the centering rotates on the skid. For example a single screw is enough to connect the two components and avoid the translation alone. The flat surface also prevents the insert inserted inside the centering from rotating.

It should be noted that with the invention the replacement of the skid is simpler.

The insert 30 is preferably made from cut metal-sheet and subsequently pressed into a bending press or hydraulic press (cold molding), to obtain the two side wings. Preferably, the round seat for housing the bush 40 is also obtained from the cut. In this way a perfect perpendicularity between the two components is always ensured.

*Side wall* generally means here a side wall of the body which defines the internal loading space thereof.

The advantages of the invention will be clearer from the following description of a preferred embodiment, with reference to the attached drawing in which
- Fig. 1 shows a schematic side view of a known system;
- Fig. 2 shows a three-dimensional and exploded view of a known system;
- Fig. 3 shows a three-dimensional and exploded view of a system according to the invention;
- Fig. 4 shows a three-dimensional view of the system of fig. 3 as assembled;
- Fig. 5 shows a cross-sectional view of a component.

In the figures, the same numbers indicate equal or conceptually similar parts, and the system is described as in use and mounted on an open-top body.

The system MC of figures 3-5 refers to a covering system to cover/uncover a body that uses a set of centerings 50 to support and unfold on the body a tarpaulin supported by the centerings 50. The centerings 50 slide on opposite edges of the body, pulled for example by cable loops as in Fig. 1.

A centering 50 has a tubular structure and has a square cross-section at least at one end 52, in which an insert 70 is mounted. The whole centering 50 can have the same cross-section as the end 52, or not. E.g. the end 52 is a part fixed to the rest or is a shaped integral part to have a particular cross-section. If the whole centering 50 has e.g. square cross-section it is easier to assemble thereon components of the system, thanks to a flat support.

The insert 70 comprises a body 68 and a flattened end for forming a flat part 74, e.g. with two square holes, which in use is vertical. The part 74 serves to position a horizontal-axis bush 76 for the passage of the dragging cable FF, while the body 58 is inserted inside the end 52.

A skid 80 is fixed under the end 52 and the insert 70 via e.g. a single screw 78, useful for firmly locking, by means of shape coupling, the end 52 to the skid 80 and the insert 70 to the end 52.

The end 52 has a lower flat side 54 for resting on the skid 80. In particular, the end 52 has a square cross-section. In other words, the side 54 forms a rectilinear segment of the cross-section of the end 52.

The skid 80 comprises a flat surface 82 complementary to the side 54, therefore the end 52 does not rotate on the skid 80. In particular the skid 80 has a seat with a square cross-section defined by the surface 82 and by four fins 84 which extend orthogonally from the surface 82. The fins 84 are two by two separated and facing each other to constitute overall the side walls of the seat which accommodates the end 52, thereby improving the opposition to the rotation of the end 52. Two facing fins 84 may also be sufficient.

The base of the skid 80 on the side facing the insert 70 preferably comprises an arcuate concavity 86 complementary to the bush 76. In this way the bush 76 can rest inside the concavity 86 remaining more stable when the body 68 is mounted inside the end 52. The less the bush 76 tilts, the less the cable FF which slides inside it can be damaged or can damage the bush 76 through rubbing.

The body 68 of the insert 70 has a U-shaped cross-section, visible in fig. 5. The cross-section is formed by three equal flat walls, a central wall 66 and two side walls 64 which are orthogonal to the first and spaced from each other. The body 68 therefore has a cross-section complementary to the inner square cross-section of the end 52, so as to be inserted snugly inside the end 52 and through shape-coupling, without being able to rotate. The edges of the side walls 64 are vertical in use and constitute a convenient and precise vertical fixing plane for the bushing 76.

## Claims

1. Covering system for an open-top body (Z), comprising
an array of tubular centerings (50) to support a covering tarpaulin (V), wherein each centering has two feet (52) equipped with a skid (80) which is in contact with, and slidable on, the top edge of edges (S) of the body, wherein
the foot (52) of a or each centering has a section comprising a rectilinear segment (54).

2. System according to claim 1, wherein the foot of the centering is a tubular section-bar.

3. System according to claim 1 or 2, wherein the skid comprises a seat (82) provided in cross-section with a rectilinear segment complementary to the foot's.

4. System according to any one of the preceding claims, comprising an insert (70) insertable into the foot wherein, for the connection to the foot, the insert (70) comprises a section comprising a rectilinear segment (66) complementary to that of the foot.

5. System according to claim 4, wherein the foot's section is polygonal or substantially polygonal.

6. System according to claim 4 or 5, wherein the insert's cross-section, at the portion insertable into the foot, is complementary to that of the foot.

7. System according to claim 4 or 5 or 6, wherein the insert's cross-section, at the portion insertable into the foot, is formed by walls arranged at 90° to provide a three-dimensional body with a C- or U-shaped cross-section.

8. System according to claim 4 or 5 or 6 or 7, wherein the insertable portion of the insert (70) is elongated along an axis and comprises a surface, disposed on a plane substantially orthogonal to said axis, on which a bush (76) is fixed with axis parallel to the plane.

9. System according to any one of the preceding claims, wherein the skid's cross-section (80), at the portion receiving the foot (50), has a complementary shape to that of the foot.

10. System according to any one of the preceding claims, wherein the skid's cross-section (80), at the portion receiving the foot (80), comprises a seat delimited by walls (84), extending at right angles from a bottom (82) on which the foot is supported.
